# EUROPEAN PATENT SPECIFICATION

(11) **EP 3 763 923 B1**
(45) Date of publication and mention of the grant of the patent: **25.09.2024**
(21) Application number: 18908697.8
(22) Date of filing: 12.03.2018
(51) Int. Cl.: F01P 7/14, F01P 7/16, F02C 7/18, F28F 27/02, F01M 5/00, F01P 3/18, F02C 7/06, F28F 3/12, F28F 3/02, F02C 7/14, F28D 21/00

(54) **HEAT EXCHANGER SYSTEM**
WÄRMETAUSCHERSYSTEM
SYSTÈME D'ÉCHANGEUR DE CHALEUR

(30) Priority: 08.03.2018 JP 2018041514
(43) Date of publication of application: 13.01.2021
(73) Proprietor: Sumitomo Precision Products Co., Ltd., Hyogo 660-0891 (JP)
(72) Inventor: HAYASHI, Hiromasa, Amagasaki-shi, Hyogo 660-0891 (JP); UEDA, Tatsuya, Amagasaki-shi, Hyogo 660-0891 (JP)
(74) Representative: Viering, Jentschura & Partner mbB Patent- und Rechtsanwälte
(86) International application number: PCT/JP2018/009407
(87) International publication number: WO 2019/171605

(56) References cited:
- EP-A1- 3 176 530
- WO-A1-2014/207784
- GB-A- 2 455 339
- JP-A- 2005 256 689
- JP-A- 2009 097 351
- JP-A- 2015 094 237
- JP-A- S5 499 838
- JP-A- S62 261 787
- JP-A- S62 261 787
- JP-U- S6 143 928
- US-A1- 2002 148 416
- US-A1- 2012 247 582
- US-B1- 6 253 837

## Description

### Technical Field

The present invention relates to a heat exchanger system, and more particularly, it relates to a heat exchanger system including a valve that switches the flow of a fluid to a heat exchanger.

### Background Art

Conventionally, a heat exchanger system including a valve is known. Such a heat exchanger system is disclosed in International Publication No. 2014/207784, for example.

International Publication No. 2014/207784 discloses a heat exchanger including a heat exchanger body and a bypass valve configured to allow a fluid to be cooled to bypass around a portion of a flow path of the heat exchanger body and flow out of the heat exchanger. The flow path of the heat exchanger body includes a forward path and a return path, and when the bypass valve is closed, the fluid to be cooled that has flowed into the forward path passes through the forward path, reaches the return path, and flows out of an end of the return path. When the bypass valve is opened, the fluid to be cooled that has flowed into the forward path passes through the bypass valve in the course of the forward path, reaches the return path, and flows out of the end of the return path. The bypass valve includes a valve body urged toward a valve seat by a compression coil spring, and is opened by a differential pressure such that a through-hole of the bypass valve communicates.

The bypass function in International Publication No. 2014/207784 is used when passing of the fluid to be cooled through a portion of the flow path of the heat exchanger is omitted when the temperature of the fluid to be cooled is too low in a low-temperature environment, for example, and the temperature of the fluid to be cooled is quickly raised.

### Prior Art

### Patent Document

Patent Document 1: International Publication No. 2014/207784

### Summary of the Invention

### Problems to be Solved by the Invention

However, in International Publication No. 2014/207784, the through-hole of the bypass valve only communicates when the valve is opened, and thus not only does the fluid to be cooled flow into the bypass valve when the valve is opened, but also a portion of the fluid to be cooled flows through the flow path along the same path as when the valve is closed without passing through the bypass valve. Therefore, in International Publication No. 2014/207784, even when the bypass valve is opened, a portion of the fluid to be cooled is cooled in the same manner as when the valve is closed, and thus it takes time to raise the temperature of the fluid to be cooled.

In International Publication No. 2014/207784, the fluid is cooled by the heat exchanger, but even when the bypass valve is provided in order to significantly reduce or prevent an excessive increase in the temperature of the fluid in a case in which the fluid is heated by the heat exchanger, for example, it becomes difficult to significantly reduce or prevent an increase in the temperature of the fluid even if the bypass valve is opened for the same reason. Therefore, it is desired to construct a heat exchanger system that allows all of a fluid to reliably bypass when a valve is opened (when the valve is switched to a bypassing state).

Further known designs are disclosed in JP S62 261787 A and in US 2012/247582 A1.

The present invention has been proposed in order to solve the aforementioned problems, and one object of the present invention is to provide a heat exchanger system including a valve configured to allow all of a fluid to reliably bypass around a heat exchanger.

### Means for Solving the Problems

In order to attain the aforementioned object, a heat exchanger system according to the present invention includes a heat exchanger configured to allow a fluid to flow therethrough and perform heat exchange, and a valve including an external inlet and an external outlet, both of which are connected to an external fluid circuit configured to allow the fluid to flow therethrough, a supply port configured to allow the fluid to be supplied to the heat exchanger, and a return port configured to receive the fluid that has passed through the heat exchanger. The valve is configured to be switchable between a first state in which the external inlet and the supply port are connected to each other, and the external outlet and the return port are connected to each other and a second state in which at least one of the supply port and the return port is shut off, and the external inlet and the external outlet are connected to each other.

In the heat exchanger system according to the present invention, with the above configuration, in the first state, the fluid from the external fluid circuit is supplied from the external inlet of the valve to the heat exchanger via the supply port, and the fluid that has passed through the heat exchanger is sent from the return port of the valve to the external fluid circuit via the external outlet. Consequently, the heat exchanger is connected to the external fluid circuit to perform heat exchange for the fluid. In the second state, at least one of the supply port and the return port is shut off, and thus the fluid that has flowed in via the external inlet of the valve cannot flow into (or flow out of) the heat exchanger and is sent to the external fluid circuit via the external outlet. Accordingly, the valve is switched to the second state such that the fluid can be sent from the valve to the external fluid circuit without flowing into the heat exchanger. Therefore, all of the fluid is allowed to reliably bypass around the heat exchanger by the valve.

In the heat exchanger system according to the present invention, the valve is preferably configured to switch between the first state and the second state according to a temperature of the fluid that flows through the valve. Accordingly, when the temperature of the fluid is too low in the heat exchanger system for cooling, or when the temperature of the fluid is too high in the heat exchanger system for heating, the valve is switched to the second state according to the temperature of the fluid such that the fluid can bypass around the heat exchanger, and unnecessary cooling or heating of the fluid by the heat exchanger can be prevented. Consequently, when the temperature of the fluid is out of a desired temperature range, the temperature of the fluid can be quickly changed to within the desired temperature range.

In the heat exchanger system according to the present invention, the valve preferably includes one valve body configured to move to switch between the first state and the second state. Accordingly, unlike a configuration in which two or more valve bodies operate in conjunction with each other for flow path switching in the valve, for example, it is possible to switch between the first state and the second state with a simple configuration including only one valve body. Note that particularly in a heat exchanger system mounted on an aircraft, for example, it is required to meet weight restrictions and size restrictions, and thus the above configuration that enables simplification of the configuration of the heat exchanger system is particularly effective.

In this case, the valve preferably includes a first passage configured to connect the external inlet to the supply port, a second passage configured to connect the external outlet to the return port, and a connection passage configured to connect the first passage to the second passage to allow the external inlet and the external outlet to communicate with each other, and the valve body is preferably configured to switch between the first state and the second state by selectively moving to a position at which the connection passage is shut off and a position at which a supply port side of the first passage with respect to the connection passage or a return port side of the second passage with respect to the connection passage is shut off. Accordingly, when the valve body shuts off the first passage, the fluid that has flowed in via the external inlet flows to the external outlet through the connection passage without flowing to the heat exchanger via the supply port. When the valve body shuts off the second passage, the fluid from the heat exchanger cannot flow via the return port, and thus the fluid that has flowed in via the external inlet cannot flow into the supply port but flows to the external outlet through the connection passage. Therefore, either the first passage or the second passage is shut off such that the valve is switched to the second state in which the fluid bypasses around the heat exchanger. Thus, a configuration in which one valve body can perform switching between the first state and the second state can be achieved simply by configuring the valve body to selectively shut off the first passage or the second passage and the connection passage. Note that in this specification, the term "shut off" refers to substantially preventing a fluid from passing. "Substantially preventing a fluid from passing" indicates that a fluid flow at a minute flow rate that is practically negligible, such as an unavoidable leak, is allowed, and does not include partially shutting off a passage to throttle the fluid flow.

In the aforementioned configuration in which the valve includes one valve body, the valve is preferably a poppet valve including the valve body configured to linearly move between a first valve seat for switching to the first state and a second valve seat for switching to the second state, and the valve body is preferably configured to contact the first valve seat on a first surface in a moving direction of the valve body and contact the second valve seat on a second surface in the moving direction of the valve body. Accordingly, it is possible to switch between the first state and the second state, using a poppet valve that can reduce the stroke of the valve body with a simple structure. In addition, whereas in a poppet valve, one valve body (poppet) generally only opens and closes one passage, one valve body (poppet) contacts the valve seats on the opposite surfaces of the valve body, respectively, and thus one valve body (poppet) can selectively perform passage switching (opening and closing of a plurality of passages) between the first state and the second state. Consequently, the heat exchanger system including the valve can be reduced in size and weight.

In the aforementioned configuration in which the valve includes one valve body, the valve preferably includes a temperature-sensitive drive configured to move the valve body according to a temperature of the fluid, and the temperature-sensitive drive is preferably configured to sense the temperature of the fluid on both a first surface side and a second surface side of the valve body. Accordingly, as compared with a configuration in which temperature sensors are provided at a plurality of locations such as the external inlet and the external outlet in the valve, and the valve body is moved by an electric actuator or the like, for example, due to the common temperature-sensitive drive, the configuration that switches the valve to the first state or the second state according to the temperature of the fluid can be simplified.

In this case, the valve body preferably has a plate shape including the first surface and the second surface, and the temperature-sensitive drive is preferably configured to penetrate the valve body to be exposed on the first surface and the second surface. Accordingly, the temperature-sensitive drive configured to sense the temperature on both the first surface side and the second surface side can be achieved with a simple configuration. In addition, the thickness of the plate-shaped valve body through which the temperature-sensitive drive penetrates can be reduced to the minimum necessary, and thus the size of the valve including the temperature-sensitive drive and the valve body can be minimized.

In the aforementioned configuration in which the valve includes the temperature-sensitive drive, the valve body preferably includes a hollow case including the first surface and the second surface, and the temperature-sensitive drive is preferably arranged inside the case. Accordingly, the temperature-sensitive drive can sense the temperature of the fluid that contacts the surface of the case via the case and move the valve body (case). Thus, the entire case serves as a temperature sensor, and the heat receiving area can be increased. Therefore, the sensitivity of the temperature-sensitive drive can be easily ensured.

In the aforementioned configuration in which the valve includes the temperature-sensitive drive, the temperature-sensitive drive is preferably configured to move the valve body to switch the valve to the first state when the fluid has a temperature equal to or higher than a predetermined temperature, and to move the valve body to switch the valve to the second state when the fluid has a temperature lower than the predetermined temperature. Accordingly, the temperature-sensitive drive switches the valve to the second state in a low-temperature environment in which the temperature of the fluid is lower than the predetermined temperature, and thus the fluid bypasses around the heat exchanger to be sent to the external fluid circuit such that the temperature of the fluid can be quickly raised. When the temperature of the fluid rises above the predetermined temperature, the temperature-sensitive drive switches the valve to the first state, and thus the heat exchanger can perform heat exchange for the fluid.

### Effect of the Invention

According to the present invention, as described above, it is possible to provide the heat exchanger system including the valve configured to allow all of the fluid to reliably bypass around the heat exchanger.

### Brief Description of the Drawings

[FIG. 1] A perspective view schematically showing a heat exchanger system according to first and second embodiments.
[FIG. 2] A schematic side view of the heat exchanger system in FIG. 1.
[FIG. 3] A sectional view schematically showing a flow path of a heat exchanger in a plan view.
[FIG. 4] A block diagram showing the flow of a fluid in the heat exchanger system and an external fluid circuit in a first state.
[FIG. 5] A block diagram showing the flow of the fluid in the heat exchanger system and the external fluid circuit in a second state.
[FIG. 6] Schematic sectional view of a valve in the first state according to the first embodiment.
[FIG. 7] Schematic sectional view of the valve in the second state according to the first embodiment.
[FIG. 8] Schematic sectional view of a valve in a first state according to the second embodiment.
[FIG. 9] Schematic sectional view of the valve in a second state according to the second embodiment.
[FIG. 10] Schematic sectional view of a valve according to a modified example of the first embodiment. Modes for Carrying Out the Invention

Embodiments of the present invention are hereinafter described on the basis of the drawings.

### [First Embodiment]

### (Overall Configuration of Heat Exchanger System)

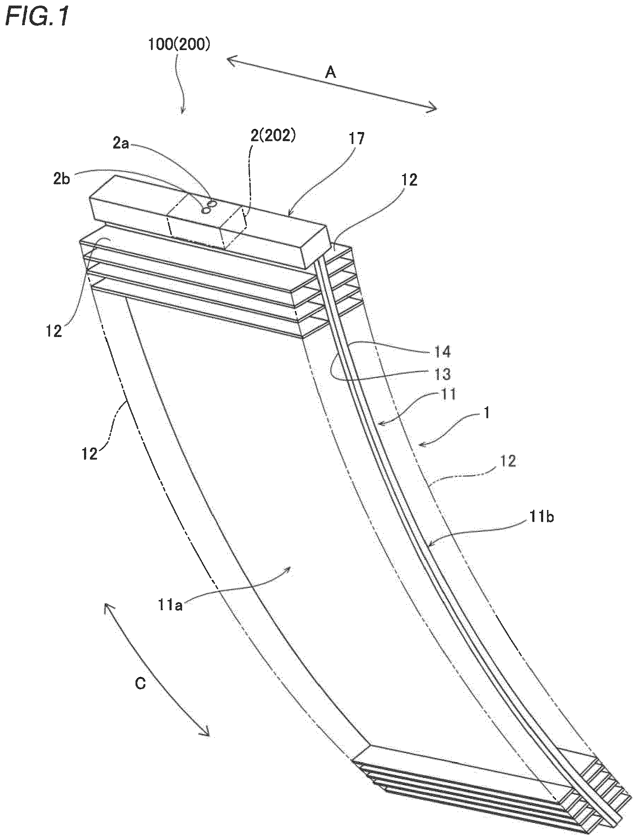

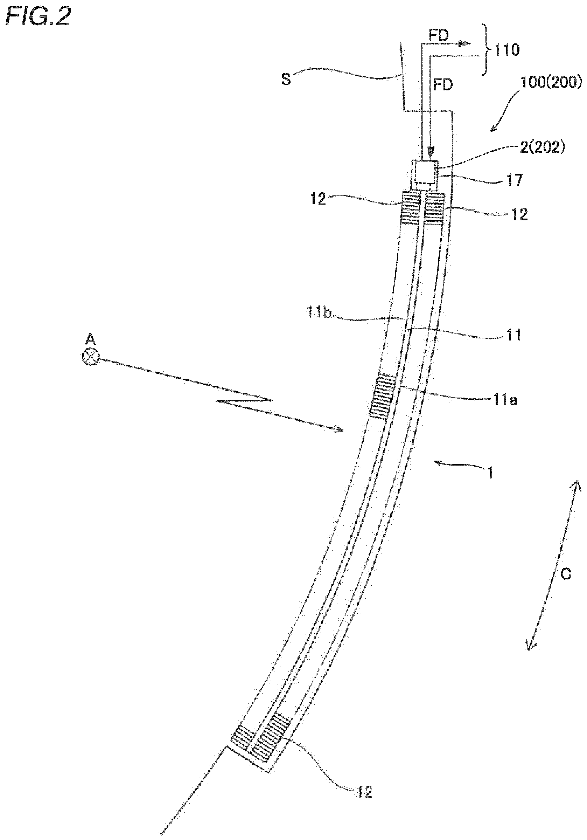

The configuration of a heat exchanger system 100 according to a first embodiment is described with reference to FIGS. 1 to 5. As shown in FIGS. 1 and 2, the heat exchanger system 100 includes a heat exchanger 1 and a valve 2. The heat exchanger system 100 according to the first embodiment is a heat exchanger system for an aircraft engine, and in particular, is an air-cooled heat exchanger (cooler) system mounted in the aircraft engine and configured to perform heat exchange between an airflow in the aircraft engine and a fluid FD (see FIG. 2). The aircraft engine is a type of engine, such as a gas turbine engine, which generates a propulsive force, utilizing air taken in a cylindrical casing from the outside, and a high-speed airflow is generated in the casing.

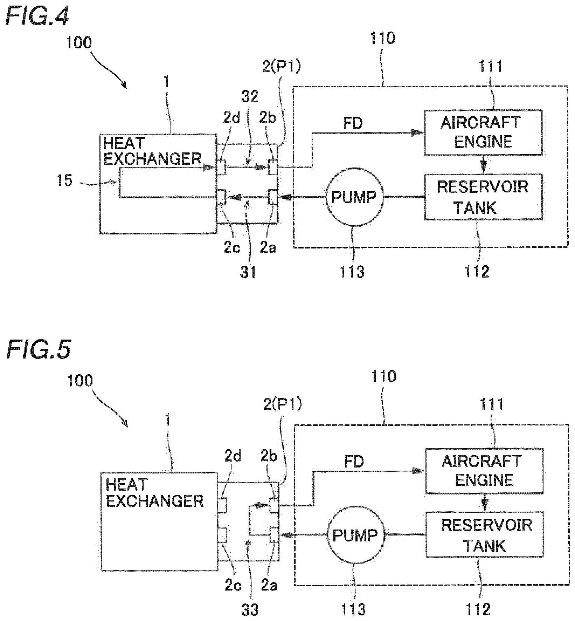

The fluid FD is a liquid. In the first embodiment, the fluid FD is a lubricating oil of an aircraft engine 111 (see FIG. 4), and is an engine lubricating oil or a lubricating oil of a generator driven by the engine, for example.

The heat exchanger 1 is a device that allows the fluid FD to flow therethrough so as to perform heat exchange. In configuration examples of FIGS. 1 and 2, the heat exchanger 1 is provided along a curved surface S (see FIG. 2) in the aircraft engine 111, and is configured to cool the fluid FD, which flows therethrough, by heat exchange with an airflow that flows through the aircraft engine 111. That is, the heat exchanger 1 is configured as a surface cooler. The surface cooler is a type of heat exchanger that cools the fluid FD that flows through a plate-shaped core 11 with an airflow that flows along radiating fins 12 provided on a surface of the core 11. The heat exchanger 1 has a curved plate shape as a whole. The curved surface S in the aircraft engine is the inner peripheral surface of a fan casing of the engine, for example, but the heat exchanger 1 may be installed on any portion in the engine as long as the portion is exposed to the airflow.

The heat exchanger 1 is typically provided along the substantially cylindrical curved surface S with a length of about 1/n round (n is a natural number) in a circumferential direction (C direction). For example, the heat exchanger 1 has a length of about 1/8 round, but the heat exchanger 1 may have an annular shape that extends over substantially the entire circumference of the curved surface S in the aircraft engine. The airflow flows along an A direction (see FIG. 1), which is a substantially axial direction (the rotational axis direction of a turbine) in the aircraft engine. The curved surface S in the aircraft engine is not necessarily a perfect cylindrical curved surface, and thus the radius of curvature of the heat exchanger 1 in that case varies depending on a position in the axial direction (A direction)

The valve 2 is a switching valve that has a plurality of openings serving as an inlet and an outlet of the fluid FD and switches a flow path for the fluid FD. The valve 2 is configured to connect the heat exchanger 1 to an external fluid circuit 110 (see FIG. 2) through which the fluid FD flows. FIGS. 1 and 2 show an example in which the valve 2 is provided in a header 17 of the heat exchanger 1. The valve 2 may be provided separately from the heat exchanger 1 and connected by piping or the like. As described below, the valve 2 has a function of switching between a state (first state) in which the fluid FD passes through the heat exchanger 1 when circulating through the valve 2 and the external fluid circuit 110 and a state (second state) in which the fluid FD circulates through the valve 2 and the external fluid circuit 110 without passing through the heat exchanger 1 (by bypassing around the heat exchanger 1). That is, the valve 2 is a valve that switches a path for the fluid FD to a path along which the fluid FD passes through the heat exchanger 1 or a path along which the fluid FD bypasses around the heat exchanger 1.

In the examples of FIGS. 1 and 2, the heat exchanger system 100 includes one heat exchanger 1 and one valve 2. The heat exchanger 1 includes the core 11 that allows the fluid FD to flow therethrough, and a plurality of plate-shaped heat radiating fins 12 provided on surfaces (11a and 11b) of the core 11.

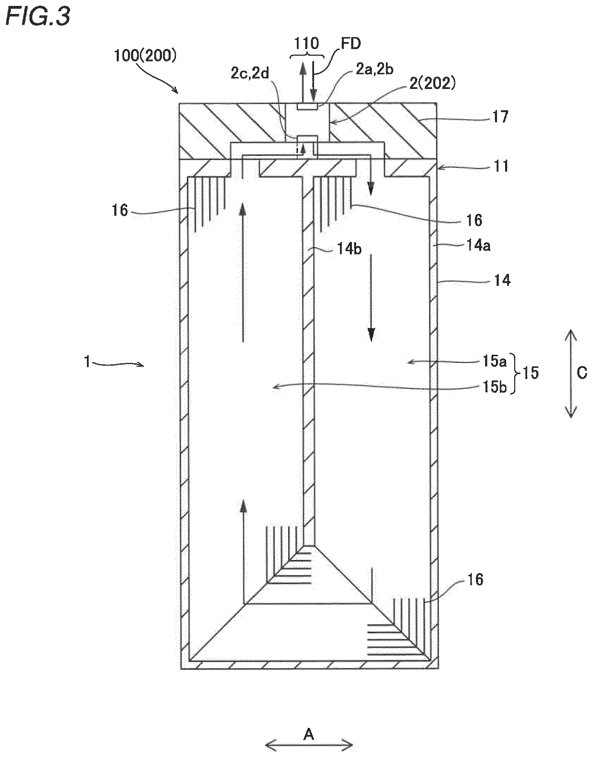

The core 11 has a curved shape along the curved surface S in the aircraft engine. The core 11 has a hollow plate shape including a first surface 11a that faces the curved surface S and a second surface 11b opposite to the first surface 11a. A flow path 15 (see FIG. 3) is formed inside the core 11. The core 11 is configured by stacking a first member 13 (see FIG. 1) on the first surface 11a side and a second member 14 (see FIG. 1) on the second surface 11b side in the plate thickness direction thereof. On the inner surface of the second member 14, the flow path 15 including a recess is formed, and corrugated fins 16 (see FIG. 3) are arranged in the flow path 15.

As shown in FIG. 3, the flow path 15 has a turned-back shape including a forward path 15a and a return path 15b. The forward path 15a and the return path 15b are partitioned by a peripheral wall 14a and a partition 14b formed on the second member 14. The forward path 15a extends from a first end of the core 11 to a second end in a longitudinal direction (C direction), and the return path 15b extends from the second end of the core 11 to the first end in the longitudinal direction. The forward path 15a and the return path 15b communicate with each other on the second end side of the core 11. The header 17 including the valve 2 is provided at the first end of the core 11 in the longitudinal direction. The forward path 15a and the return path 15b are connected to the valve 2 at the header 17.

The corrugated fins 16 are plate-shaped fins having a wave shape in a direction (flow path width direction, A direction) orthogonal to a direction in which the flow path 15 (the forward path 15a and the return path 15b) extends. The corrugated fins 16 are joined to the first member 13 and the second member 14 on opposite sides in the thickness direction thereof, and partition the flow path 15 into a plurality of fine flow paths. Note that the corrugated fins 16 are provided over the entire flow path 15, but in FIG. 3, only a portion thereof is shown for convenience of illustration.

As shown in FIG. 1, the plurality of radiating fins 12 are provided on each of the first surface 11a and the second surface 11b. Each radiating fin 12 has a plate shape. Each radiating fin 12 is provided upright in a direction substantially perpendicular to each surface (11a and 11b). The plurality of radiating fins 12 are provided in parallel to each other at substantially equal intervals (substantially equal pitches). The plurality of radiating fins 12 extend along the short-side direction (A direction) of the core 11. That is, the plurality of radiating fins 12 extend along the axial direction (A direction) in the aircraft engine.

The core 11 is made of aluminum, an aluminum alloy, stainless steel, titanium, copper, or Inconel (registered trademark), for example. Materials for the main structures of the radiating fins 12, the valve 2 and the header 17 are also the same as that of the core 11.

As shown in FIGS. 4 and 5, the valve 2 fluidly connects the external fluid circuit 110 to the heat exchanger 1. The valve 2 includes four openings that serve as flow inlets or flow outlets of the fluid FD. Specifically, the valve 2 includes an external inlet 2a and an external outlet 2b connected to the external fluid circuit 110 through which the fluid FD flows, a supply port 2c that allows the fluid FD to be supplied to the heat exchanger 1, and a return port 2d that receives the fluid FD that has passed through the heat exchanger 1.

The external inlet 2a is connected to a piping path for the fluid FD that flows from the external fluid circuit 110 to the heat exchanger system 100. The external outlet 2b is connected to a piping path for the fluid FD that flows from the heat exchanger system 100 to the external fluid circuit 110.

The external fluid circuit 110 is a fluid circuit provided in an aircraft to circulate the fluid FD (lubricating oil). As shown in FIGS. 4 and 5, the external fluid circuit 110 includes the aircraft engine 111 (a lubricating oil flow path in the aircraft engine), a reservoir tank 112, and a pump 113 as main components. The external fluid circuit 110 includes the aircraft engine 111 as a heat generator. The fluid FD absorbs heat generated in the aircraft engine 111 in the process of lubricating the inside of the aircraft engine 111 and is heated. The fluid FD is stored in the reservoir tank 112. The pump 113 circulates the fluid FD in the reservoir tank 112 between the external fluid circuit 110 and the heat exchanger system 100. Thus, the heat exchanger 1 communicates with the external fluid circuit 110 including the aircraft engine 111 via the valve 2.

The supply port 2c and the return port 2d are connected to the flow path 15 (see FIG. 3) of the heat exchanger 1 at the header 17 (see FIG. 3). The supply port 2c and the return port 2d are connected to a first end and a second end of the same flow path 15, respectively.

In the first embodiment, the valve 2 is configured to be switchable between the first state P1 (see FIG. 4) in which the external inlet 2a and the supply port 2c are connected to each other, and the external outlet 2b and the return port 2d are connected to each other and the second state P2 (see FIG. 5) in which the return port 2d is shut off, and the external inlet 2a and the external outlet 2b are connected to each other. The valve 2 is configured to switch between the first state P1 and the second state P2 according to the temperature of the fluid FD that flows through the valve 2.

### <First State>

As shown in FIG. 4, in the first state P1, the valve 2 allows the external fluid circuit 110 and the heat exchanger 1 to communicate with each other. The valve 2 receives the high-temperature fluid FD from the external fluid circuit 110 via the external inlet 2a and sends the same to the supply port 2c by the pressure of the pump 113 by connecting the external inlet 2a to the supply port 2c. The fluid FD flows through the flow path 15 of the heat exchanger 1 via the supply port 2c into the return port 2d of the valve 2.

The valve 2 receives the fluid FD from the heat exchanger 1 via the return port 2d and sends the same to the external outlet 2b by the pressure of the pump 113 by connecting the external outlet 2b to the return port 2d. The fluid FD cooled in the process of passing through the heat exchanger 1 flows into the aircraft engine 111 through the piping path in the external fluid circuit 110.

Thus, in the first state P1, a path through which the fluid FD circulates in the order of the reservoir tank 112, the pump 113, the valve 2, the heat exchanger 1, the valve 2, the aircraft engine 111, and the reservoir tank 112 is formed. The first state P1 is a switching state to which the valve 2 is switched during normal operation in which the fluid FD warmed by the aircraft engine 111 is cooled in the heat exchanger 1.

### <Second State>

As shown in FIG. 5, in the second state P2, the valve 2 bypasses the heat exchanger 1 from the external fluid circuit 110. The valve 2 receives the fluid FD from the external fluid circuit 110 via the external inlet 2a and sends the same to the external outlet 2b by the pressure of the pump 113 by connecting the external inlet 2a to the external outlet 2b. At this time, the return port 2d is shut off, and thus all of the fluid FD in the valve 2 flows out of the external outlet 2b without flowing to the heat exchanger 1 side. The fluid FD sent from the valve 2 without passing through the heat exchanger 1 flows into the aircraft engine 111 through the piping path in the external fluid circuit 110.

Thus, in the second state P2, a path through which the fluid FD circulates in the order of the reservoir tank 112, the pump 113, the valve 2, the aircraft engine 111, and the reservoir tank 112 is formed. In the second state P2, the fluid FD does not pass through the heat exchanger 1, and thus the heat of the fluid FD warmed by the aircraft engine 111 is not discharged from the heat exchanger 1 to the outside. Therefore, the second state P2 is a switching state to which the valve 2 is switched during low-temperature operation for rapidly raising the temperature of the low-temperature fluid FD in a low-temperature environment, for example, by allowing the fluid FD to bypass around the heat exchanger 1.

### (Structural Example of Valve)

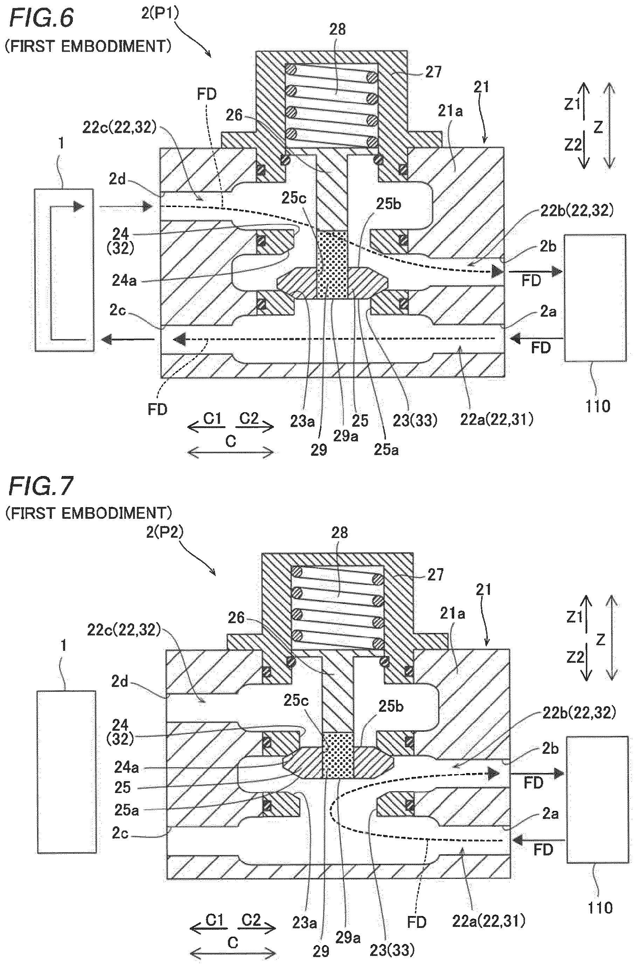

A specific structural example of the valve 2 is now described in detail with reference to FIGS. 6 and 7. In FIG. 6, in the C direction, the core 11 side with respect to the valve 2 is defined as a C1 direction, and a direction opposite to the C1 direction is defined as a C2 direction. The plate thickness direction of the core 11 (header 17) substantially orthogonal to the C direction is defined as a Z direction.

The valve 2 includes a main body 21 including four openings including the external inlet 2a, the external outlet 2b, the supply port 2c, and the return port 2d. In an example of FIG. 6, the external inlet 2a and the external outlet 2b are open at a first end (an end in the C2 direction) of the main body 21 in the C direction, and the supply port 2c and the return port 2d are open at a second end (an end in the C1 direction) of the main body 21 in the C direction. The external inlet 2a and the external outlet 2b are open to the outside of the header 17 (see FIG. 1). The supply port 2c is fluidly connected to a first end of the forward path 15a (see FIG. 3) in the core 11. The return port 2d is fluidly connected to a first end of the return path 15b (see FIG. 3) in the core 11.

The main body 21 includes three passages 22 (22a to 22c) as internal spaces partitioned by a partition wall 21a.

The passage 22a extends in the C direction from the external inlet 2a to the supply port 2c. The passage 22b extends from the external outlet 2b to the vicinity of the center of the main body 21 in the C direction (C1 direction). The passage 22c extends in the C direction (C2 direction) from the return port 2d to the vicinity of the center of the main body 21. The passages 22a, 22b, and 22c are arranged in this order in the Z direction. That is, the passage 22a and the passage 22b are adjacent to each other via the partition wall 21a, and the passage 22b and the passage 22c are adjacent to each other via the partition wall 21a.

The passage 22a and the passage 22b communicate with each other through a communication hole 23 in a central portion of the main body 21 in the C direction. The communication hole 23 penetrates the partition wall 21a between the passage 22a and the passage 22b in the Z direction.

The passage 22b and the passage 22c communicate with each other through a communication hole 24 in the central portion of the main body 21 in the C direction. The communication hole 24 penetrates the partition wall 21a between the passage 22b and the passage 22c in the Z direction.

The communication hole 23 and the communication hole 24 are formed at the same position in the C direction so as to penetrate the partition wall 21a in the Z direction, and are linearly arranged side by side so as to face each other in the Z direction.

With such a structure, the valve 2 includes a first passage 31 that connects the external inlet 2a to the supply port 2c, a second passage 32 that connects the external outlet 2b to the return port 2d, a connection passage 33 (see FIG. 7) that connects the first passage 31 to the second passage 32 and allows the external inlet 2a and the external outlet 2b to communicate with each other.

That is, in examples of FIGS. 6 and 7, the first passage 31 includes the passage 22a. The second passage 32 includes the passage 22c, the communication hole 24, and the passage 22b. The connection passage 33 includes the communication hole 23.

<Valve Body>

The valve 2 includes one valve body 25 that moves to switch between the first state P1 and the second state P2. The valve body 25 is configured to switch between the first state P1 and the second state P2 by selectively moving to a position at which the connection passage 33 is shut off and a position at which the return port 2d side of the second passage 32 with respect to the connection passage 33 is shut off.

Specifically, the valve 2 is a poppet valve including the valve body 25 configured to linearly move between a first valve seat 23a for switching to the first state P1 and a second valve seat 24a for switching to the second state P2. The poppet valve is a type of valve in which the valve body moves in a direction perpendicular to the valve seat, and the valve body 25 that contacts the valve seat to open and close the flow path is called a poppet.

The valve body 25 is arranged inside the passage 22b. The valve body 25 is arranged in the central portion in the C direction in which the communication holes 23 and 24 are formed. That is, the valve body 25 faces each of the communication holes 23 and 24 in the Z direction. The valve body 25 has an outer shape that allows each of the communication holes 23 and 24 to be closed.

The valve body 25 is configured to be linearly movable in the Z direction. The valve body 25 is connected to the tip side of a rod 26 that extends in the Z direction. The rod 26 is a piston rod including a base fitted in a cylinder 27, and is configured to be slidable inside the cylinder 27 in the Z direction. A spring member 28 that urges the rod 26 in the extension direction (Z2 direction) thereof is provided in the cylinder 27.

The first valve seat 23a is provided at an opening edge of the communication hole 23 on the passage 22b side. The first valve seat 23a is an inclined surface that is inclined in a concave shape (mortar shape) toward the center of the communication hole 23. Similarly, the second valve seat 24a is provided at an opening edge of the communication hole 24 on the passage 22b side. The second valve seat 24a is an inclined surface that is inclined in a concave shape (mortar shape) toward the center of the communication hole 24.

The valve body 25 is configured to contact the first valve seat 23a on a first surface 25a in the moving direction (Z direction) thereof and contact the second valve seat 24a on a second surface 25b in the moving direction thereof. The valve body 25 has a flat plate shape, and has the first surface 25a on the communication hole 23 side and the second surface 25b on the communication hole 24 side. Inclined surfaces each having a shape corresponding to the opposing valve seat are formed on each of the peripheries of the first surface 25a and the second surface 25b.

Thus, the valve body 25 is configured to move to a first side (Z2 direction) in the Z direction such that the first surface 25a contacts the first valve seat 23a to shut off the communication hole 23. Furthermore, the valve body 25 is configured to move to a second side (Z1 direction) in the Z direction such that the second surface 25b contacts the second valve seat 24a to shut off the communication hole 24.

### <Temperature-Sensitive Drive>

The valve 2 includes a temperature-sensitive drive 29 that moves the valve body 25 according to the temperature of the fluid FD. The temperature-sensitive drive 29 is a temperature-sensitive actuator that generates a driving force according to temperature. Although not shown in detail, the temperature-sensitive drive 29 includes a case that houses wax that expands and contracts according to temperature, and a piston rod that advances from and retracts to the case as the wax expands and contracts. That is, the temperature-sensitive drive 29 is configured to expand and deform (the length increases) when the temperature exceeds a preset predetermined temperature, and contract and deform (the length decreases) when the temperature falls below the predetermined temperature.

The temperature-sensitive drive 29 (see FIG. 6) is provided as a portion of the rod 26 that supports the valve body 25. Specifically, the temperature-sensitive drive 29 is provided at the tip of the rod 26, and the valve body 25 is provided at the tip of the temperature-sensitive drive 29. The temperature-sensitive drive 29 expands and contracts in the Z direction. Thus, the temperature-sensitive drive 29 expands and deforms to move the valve body 25 toward the first valve seat 23a. The temperature-sensitive drive 29 (see FIG. 7) contracts and deforms to move the valve body 25 toward the second valve seat 24a.

The temperature-sensitive drive 29 is configured to move the valve body 25 such that the valve 2 is in the first state P1 when the fluid FD is at or above the predetermined temperature, and the valve 2 is in the second state P2 when the fluid FD is below the predetermined temperature.

That is, when the fluid FD having a temperature equal to or higher than the predetermined temperature flows through the valve 2, the temperature-sensitive drive 29 expands and deforms due to the expansion of the wax, as shown in FIG. 6. Consequently, the temperature-sensitive drive 29 brings the first surface 25a of the valve body 25 into contact with and presses the first valve seat 23a so as to close the communication hole 23. A reaction force generated when the temperature-sensitive drive 29 presses the valve body 25 against the first valve seat 23a is supported by the spring member 28 and the cylinder 27 via the rod 26. Thus, when the fluid FD has a temperature equal to or higher than the predetermined temperature, the external inlet 2a and the supply port 2c communicate with each other, and the valve 2 is in the first state P1 in which the external outlet 2b and the return port 2d communicate with each other. That is, in the first state, the first passage 31 and the second passage 32 communicate with each other, and the connection passage 33 is shut off.

When the fluid FD having a temperature lower than the predetermined temperature flows through the valve 2, the temperature-sensitive drive 29 contracts and deforms due to the contraction of the wax, as shown in FIG. 7. Consequently, the temperature-sensitive drive 29 brings the second surface 25b of the valve body 25 into contact with and presses the second valve seat 24a so as to close the communication hole 24. A reaction force generated when the temperature-sensitive drive 29 presses the valve body 25 against the second valve seat 24a acts in a direction in which the rod 26 is pulled, and when the rod 26 reaches the maximum stroke position, the reaction force is supported by the cylinder 27. Thus, when the fluid FD has a temperature lower than the predetermined temperature, the return port 2d is shut off, and the valve 2 is in the second state P2 in which the external inlet 2a and the external outlet 2b communicate with each other. That is, in the second state P2, the second passage 32 (the return port 2d side of the second passage 32 with respect to the connection passage 33) is shut off, and the connection passage 33 communicates.

In the first state (see FIG. 6), the spring member 28 functions as a relief mechanism that opens the communication hole 23 when an excessive pressure acts on the valve 2. In the first state, when a pressure exceeding the urging force of the spring member 28 acts on the first passage 31, the spring member 28 contracts, and the rod 26 separates from the first valve seat 23a together with the valve body 25. Thus, the connection passage 33, in which the external inlet 2a and the external outlet 2b communicate with each other via the communication hole 23, communicates, and a portion of the fluid FD flows into the connection passage 33 such that an excessive pressure is released.

The temperature-sensitive drive 29 can sense the temperature of the fluid FD on both the first surface 25a side and the second surface 25b side of the valve body 25. In the first embodiment, the temperature-sensitive drive 29 penetrates the valve body 25 to be exposed on the first surface 25a and the second surface 25b. The temperature-sensitive drive 29 is fitted in a through-hole 25c that penetrates the valve body 25 in the thickness direction (Z direction) of the valve body 25. The tip surface 29a of the temperature-sensitive drive 29 is exposed from the through-hole 25c to the passage 22a side (communication hole 23). The temperature-sensitive drive 29 includes a portion that extends from the second surface 25b of the valve body 25 to the tip of the rod 26 so as to protrude to the second side (Z1 direction), and is exposed to the passage 22c side (communication hole 24) with respect to the valve body 25.

In the first state (see FIG. 6) in which the temperature-sensitive drive 29 expands and deforms, the base side of the temperature-sensitive drive 29 protrudes into the communication hole 24. The heat receiving area of the temperature-sensitive drive 29 is larger on the second surface 25b side of the valve body 25 than on the first surface 25a side. Therefore, although the temperature is also sensed on the first passage 31 side, the sensitivity to the temperature of the fluid FD that passes through the second passage 32 via the return port 2d after passing through the heat exchanger 1 is particularly ensured.

The temperature-sensitive drive 29 is exposed in the connection passage 33 in the second state P2 in which the temperature-sensitive drive 29 contracts. In the second state P2, the fluid FD does not flow on the passage 22c side, but the tip surface 29a of the temperature-sensitive drive 29 faces the communication hole 23. Consequently, when the fluid FD that passes through the connection passage 33 during bypassing passes through the communication hole 23 via the external inlet 2a, the fluid FD is likely to contact the temperature-sensitive drive 29, and the sensitivity to the temperature of the fluid FD is ensured.

### <Operation of Heat Exchanger System>

An operation example of the heat exchanger system 100 is now described. FIGS. 6 and 7 are referred to for each portion of the valve 2. FIGS. 4 and 5 are referred to for each portion of the external fluid circuit 110.

First, when the aircraft engine 111 is started, for example, the pump 113 of the external fluid circuit 110 starts circulating the fluid FD in a low-temperature state, and the fluid FD flows into the external inlet 2a of the valve 2. While the temperature of the fluid FD that has flowed into the external inlet 2a is lower than the predetermined temperature, the temperature-sensitive drive 29 contracts and deforms, and the valve body 25 contacts the second valve seat 24a. Consequently, the valve 2 is in the second state P2. The fluid FD is sent from the external outlet 2b to the external fluid circuit 110 through the connection passage 33 without flowing to the heat exchanger 1 side. Therefore, while the valve 2 is in the second state P2, the fluid FD receives heat from the aircraft engine 111, for example, in the process of flowing through the external fluid circuit 110, but does not actively release heat in the heat exchanger 1. Thus, the temperature rises efficiently.

When the temperature of the fluid FD that has flowed into the external inlet 2a becomes equal to or higher than the predetermined temperature, the temperature-sensitive drive 29 expands and deforms, and the valve body 25 contacts the first valve seat 23a. Consequently, the valve 2 is in the first state P1. The fluid FD flows to the heat exchanger 1 side through the first passage 31. The fluid FD flows in from a first end of the forward path 15a (see FIG. 3) via the supply port 2c of the valve 2, flows into the return path 15b (see FIG. 3) at a second end (turned-back portion) of the forward path 15a, and returns from a first end of the return path 15b to the return port 2d of the valve 2.

As shown in FIG. 1, on the outside of the core 11, a high-speed airflow passes along each radiating fin 12 on the surfaces (11a and 11b) of the core 11 as the aircraft engine 111 (see FIG. 6) operates. Consequently, heat exchange is performed between the fluid FD that flows through the core 11 (through the flow path 15) shown in FIG. 3 and an external airflow via the core 11 and each radiating fin 12. That is, the heat of the high-temperature fluid FD is transferred to each radiating fin 12 via the corrugated fins 16, the first member 13, and the second member 14, and is radiated from each radiating fin 12 to the external airflow.

The fluid FD cooled in the heat exchanger 1 is sent from the heat exchanger 1 to the external fluid circuit 110 through the second passage 32 of the valve 2. Therefore, while the valve 2 is in the first state P1, the fluid FD circulates in the external fluid circuit 110, the valve 2, and the heat exchanger 1 while efficiently releasing the heat absorbed from the aircraft engine 111, for example, in the heat exchanger 1.

### (Advantageous Effects of First Embodiment)

According to the first embodiment, the following advantageous effects are achieved.

According to the first embodiment, with the above configuration, in the first state P1, the heat exchanger 1 is connected to the external fluid circuit 110, and performs heat exchange for the fluid FD. In the second state P2, the return port 2d is shut off, and thus the fluid FD that has flowed in via the external inlet 2a of the valve 2 is sent to the external fluid circuit 110 via the external outlet 2b. Accordingly, the valve 2 is switched to the second state P2 such that the fluid FD can be sent from the valve 2 to the external fluid circuit 110 without flowing into the heat exchanger 1. Therefore, all of the fluid FD is allowed to reliably bypass around the heat exchanger 1 by the valve 2.

Furthermore, the valve 2 includes one valve body 25 that moves to switch between the first state P1 and the second state P2. Accordingly, unlike a configuration in which two or more valve bodies operate in conjunction with each other for flow path switching in the valve 2, for example, it is possible to switch between the first state P1 and the second state P2 with a simple configuration. Note that particularly in a heat exchanger system 100 mounted on an aircraft, it is required to meet weight restrictions and size restrictions, and thus the above configuration that enables simplification of the configuration of the heat exchanger system 100 is particularly effective.

Furthermore, the valve body 25 is configured to switch between the first state P1 and the second state P2 by selectively moving to the position at which the connection passage 33 is shut off and the position at which the return port 2d side of the second passage 32 with respect to the connection passage 33 is shut off. Accordingly, a configuration in which one valve body 25 can perform switching between the first state P1 and the second state P2 can be achieved simply by configuring the valve body 25 to selectively shut off the second passage 32 and the connection passage 33.

Furthermore, the valve 2 is a poppet valve, and the valve body 25 contacts the first valve seat 23a on the first surface 25a in the moving direction and contacts the second valve seat 24a on the second surface 25b in the moving direction. Accordingly, it is possible to switch between the first state P1 and the second state P2, using a poppet valve that can reduce the stroke of the valve body 25 with a simple structure. In addition, whereas in a poppet valve, one valve body (poppet) generally only opens and closes one passage, one valve body 25 (poppet) contacts the valve seats (23a and 24a) on the opposite surfaces (25a and 25b) of the valve body 25, respectively, and thus one valve body 25 can selectively perform passage switching (opening and closing of a plurality of passages) between the first state P1 and the second state P2. Consequently, the heat exchanger system 100 including the valve 2 can be reduced in size and weight.

Furthermore, the temperature-sensitive drive 29 configured to sense the temperature of the fluid FD on both the first surface 25a side and the second surface 25b side of the valve body 25 is provided. Accordingly, as compared with a configuration in which temperature sensors are provided at a plurality of locations such as the external inlet 2a and the external outlet 2b in the valve, and the valve body is moved by an electric actuator or the like, for example, due to the common temperature-sensitive drive 29, the configuration that switches the valve 2 to the first state P1 or the second state P2 according to the temperature of the fluid FD can be simplified.

Furthermore, the temperature-sensitive drive 29 penetrates the valve body 25 to be exposed on the first surface 25a and the second surface 25b. Accordingly, the temperature-sensitive drive 29 configured to sense the temperature on both the first surface 25a side and the second surface 25b side can be achieved with a simple configuration. In addition, the thickness of the plate-shaped valve body 25 through which the temperature-sensitive drive 29 penetrates can be reduced to the minimum necessary, and thus the size of the valve 2 including the temperature-sensitive drive 29 and the valve body 25 can be minimized.

Furthermore, the valve 2 switches between the first state P1 and the second state P2 according to the temperature of the fluid FD that flows through the valve 2. Accordingly, when the temperature of the fluid FD is out of a desired temperature range, the temperature of the fluid FD can be changed quickly to within the desired temperature range.

Specifically, the temperature-sensitive drive 29 switches the valve 2 to the second state P2 in a low-temperature environment in which the temperature of the fluid FD is lower than the predetermined temperature, and thus the fluid FD bypasses around the heat exchanger 1 to be sent to the external fluid circuit 110 such that the temperature of the fluid FD can be quickly raised. When the temperature of the fluid FD rises above the predetermined temperature, the temperature-sensitive drive 29 switches the valve 2 to the first state P1, and thus the heat exchanger 1 can perform heat exchange for the fluid FD.

Furthermore, the heat exchanger 1 is provided along the curved surface S in the aircraft engine 111 to cool the fluid FD that flows therethrough by heat exchange with the airflow that flows through the aircraft engine 111. Accordingly, it is possible to obtain the heat exchanger system 100 including the valve 2 configured to allow the fluid FD (lubricating oil) to be cooled to reliably bypass around a surface cooler formed along the curved surface S (such as the inner peripheral surface of the fan casing) in the aircraft engine 111.

### [Second Embodiment]

A second embodiment is now described with reference to FIGS. 1 to 3, 8, and 9. In the second embodiment, an example is described in which a heat exchanger system 200 (see FIGS. 1 to 3) has a valve configuration different from that of the first embodiment. In the second embodiment, the configurations other than a valve 202 are the same as or similar to those of the first embodiment, and thus the same reference numerals are used, and description thereof is omitted.

### (Valve)

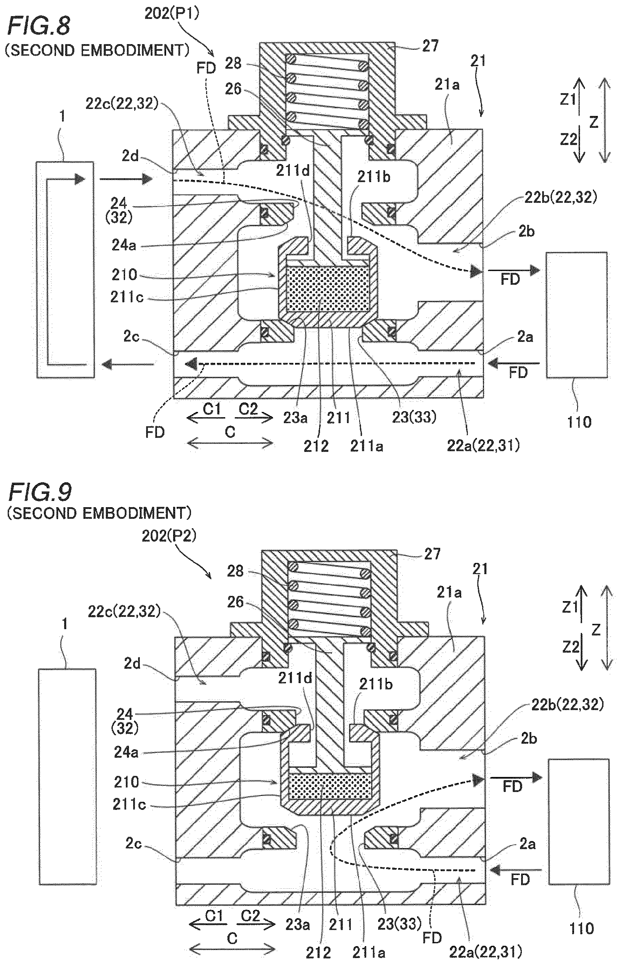

The heat exchanger system 200 according to the second embodiment includes a heat exchanger 1 and the valve 202, as shown in FIG. 1. As shown in FIGS. 8 and 9, the valve 202 includes one valve body 210 that moves to switch between a first state P1 (see FIG. 8) and a second state P2 (see FIG. 9). The valve 202 according to the second embodiment is a poppet valve including the valve body 210 configured to linearly move between a first valve seat 23a for switching to the first state P1 and a second valve seat 24a for switching to the second state P2, similarly to the first embodiment.

In the second embodiment, the valve body 210 includes a hollow case 211 including a first surface 211a and a second surface 211b. The case 211 has the first surface 211a, the second surface 211b, and a side surface 211c, and includes, on the second surface 211b side, an insertion hole 211d that penetrates the case 211. The tip of a rod 26 is inserted into the insertion hole 211d so as to be slidable on the inner peripheral surface of the case 211.

In the second embodiment, a temperature-sensitive drive 212 is arranged inside the case 211. That is, the temperature-sensitive drive 212 is housed in an internal space surrounded by the case 211 and the tip of the rod 26. The temperature-sensitive drive 212 according to the second embodiment has a configuration in which wax is encapsulated in the valve body 210 (case 211), and the rod 26 functions as a piston rod of the temperature-sensitive drive 212.

With this configuration, the temperature-sensitive drive 212 can sense the temperature of a fluid FD on both the first surface 211a side and the second surface 211b side of the valve body 210, and can sense the temperature of the fluid FD from the entire surface of the valve body 210 (case 211) via the case 211. In other words, in the second embodiment, in addition to the function of selectively closing a second passage 32 or a connection passage 33, the valve body 210 functions as a temperature sensor that senses the heat of the fluid FD to expand or contract the temperature-sensitive drive 212. The case 211 is made of a material such as metal capable of transmitting the heat of the fluid FD to the internal temperature-sensitive drive 212 (wax).

The temperature-sensitive drive 212 moves the valve body 210 to switch the valve 202 to the first state P1 when the fluid FD has a temperature equal to or higher than a predetermined temperature. That is, when the fluid FD having a temperature equal to or higher than the predetermined temperature contacts the valve body 210, the temperature of the fluid FD is transmitted to the temperature-sensitive drive 212 inside the valve body 210, and the temperature-sensitive drive 212 expands and deforms. Due to the expansion and deformation of the temperature-sensitive drive 212 inside the case 211, the first surface 211a of the valve body 210 moves toward a communication hole 23, and contacts the first valve seat 23a. Consequently, the connection passage 33 is shut off, and the valve 202 is in the first state. Thus, an external inlet 2a and a supply port 2c are connected to each other, and an external outlet 2b and a return port 2d are connected to each other.

The temperature-sensitive drive 212 moves the valve body 210 to switch the valve 202 to the second state P2 when the fluid FD has a temperature lower than the predetermined temperature. That is, when the fluid FD having a temperature lower than the predetermined temperature contacts the valve body 210, the temperature of the fluid FD is transmitted to the temperature-sensitive drive 212 inside the valve body 210, and the temperature-sensitive drive 212 contracts and deforms. Due to the contraction and deformation of the temperature-sensitive drive 212 inside the case 211, the second surface 211b of the valve body 210 moves toward a communication hole 24, and contacts the second valve seat 24a. Consequently, the second passage 32 (the return port 2d side of the second passage 32 with respect to the connection passage 33) is shut off, and the valve 202 is in the second state P2. Thus, the return port 2d is shut off, and the external inlet 2a and the external outlet 2b are connected to each other.

The dimension in a Z direction of the valve body 210 according to the second embodiment is larger by the stroke of the temperature-sensitive drive 212 than that of the plate-shaped valve body 25 according to the first embodiment. In the second embodiment, heat can be transferred from the entire outer surface of the case 211, which contacts the fluid FD, to the temperature-sensitive drive 212, and thus the heat receiving area of the temperature-sensitive drive 212 is increased. Consequently, it is possible to improve the sensitivity of the valve 202 to the temperature of the fluid FD when the valve 202 switches between the first state P1 and the second state P2.

The remaining configurations of the second embodiment are similar to those of the first embodiment.

### (Advantageous Effects of Second Embodiment)

According to the second embodiment, similarly to the first embodiment, in the first state P1, the heat exchanger 1 is connected to an external fluid circuit 110, and the heat exchanger 1 performs heat exchange for the fluid FD. In the second state P2, the return port 2d is shut off, and thus the fluid FD that has flowed in via the external inlet 2a of the valve 202 is sent to the external fluid circuit 110 via the external outlet 2b. Accordingly, the valve 202 is switched to the second state P2 such that the fluid FD can be sent from the valve 202 to the external fluid circuit 110 without flowing into the heat exchanger 1, and thus all of the fluid FD is allowed to reliably bypass around the heat exchanger 1 by the valve 202.

Furthermore, the temperature-sensitive drive 212 is arranged inside the case 211 of the valve body 210 including the first surface 211a and the second surface 211b. Accordingly, the temperature-sensitive drive 212 can sense the temperature of the fluid FD that contacts the surface of the case 211 via the case 211 and move the valve body 210 (case 211). Thus, the entire case 211 serves as a temperature sensor, and thus the sensitivity of the temperature-sensitive drive 212 can be easily ensured.

The remaining advantageous effects of the second embodiment are similar to those of the first embodiment.

### [Modified Examples]

The embodiments disclosed this time must be considered as illustrative in all points and not restrictive. The scope of the present invention is not shown by the above description of the embodiments but by the scope of claims for patent, and all modifications (modified examples) within the meaning and scope equivalent to the scope of claims for patent are further included.

For example, while the example in which the heat exchanger is a surface cooler has been shown in each of the aforementioned first and second embodiments, the present invention is not restricted to this. The present invention may be applied to a plate-fin heat exchanger or a shell and tube heat exchanger other than a surface cooler. In that case, it is not necessary to provide the heat exchanger along the curved surface S in the aircraft engine, and the heat exchanger may be installed at a predetermined position in the engine or may be installed in a bypass flow path through which a branched portion of the airflow in the engine flows, for example. Alternatively, the present invention may be applied to a heat exchanger system mounted on an aircraft other than the heat exchanger system as an oil cooler configured to cool a lubricating oil of the aircraft, or a heat exchanger system provided in other equipment other than an aircraft.

While the example in which the fluid FD is a lubricating oil of an engine or a lubricating oil of a generator, for example has been shown in each of the aforementioned first and second embodiments, the present invention is not restricted to this. The type of fluid FD is not particularly limited. The fluid FD may be any fluid.

While the heat exchanger system 100 in which the high-temperature fluid FD is cooled by the heat exchanger 1 has been shown as an example in each of the aforementioned first and second embodiments, the present invention is not restricted to this. In the present invention, a heat exchanger system in which a low-temperature fluid is heated by a heat exchanger may be used. In that case, when the temperature of the fluid is too high in a high-temperature environment, for example, a valve is switched to a second state P2 according to the temperature of the fluid so as to allow the fluid to bypass around the heat exchanger and sent to an external fluid circuit. Thus, the temperature of the fluid can be quickly reduced.

While the example in which the valve 2 (202) that switches between the first state P1 and the second state P2 according to the temperature of the fluid FD is provided has been shown in each of the aforementioned first and second embodiments, the present invention is not restricted to this. In the present invention, the valve may be switched based on a physical quantity other than the temperature of the fluid, such as a pressure, or the valve may be switched based on an electric signal from a controller, for example.

While the example in which one valve body 25 (210) switches between the first state P1 and the second state P2 has been shown in each of the aforementioned first and second embodiments, the present invention is not restricted to this. In the present invention, the valve may include a plurality of valve bodies that move in conjunction with each other.

While the example in which the valve 2 (202) is configured as a poppet valve has been shown in each of the aforementioned first and second embodiments, the present invention is not restricted to this. In the present invention, the valve may be a type of valve other than a poppet valve, such as a spool valve.

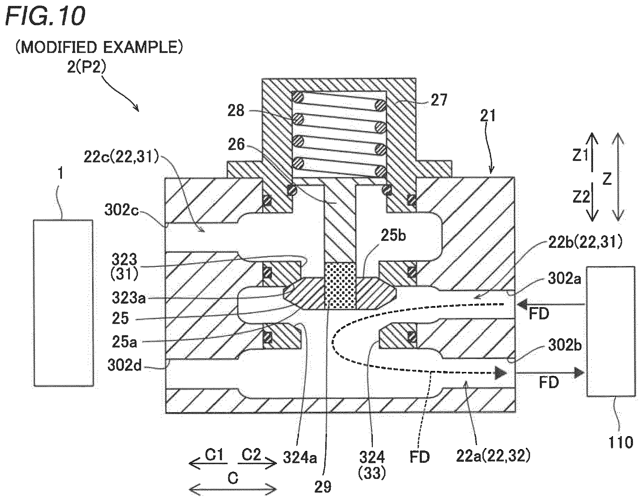

While the example in which in the second state P2, the valve body 25 (210) shuts off the return port 2d (the return port 2d side of the second passage 32 with respect to the connection passage 33) such that the fluid FD is allowed to bypass around the heat exchanger 1 has been shown in each of the aforementioned first and second embodiments, the present invention is not restricted to this. In the second state P2, the valve body 25 may shut off the supply port 2c (the supply port 2c side of the first passage 31 with respect to the connection passage 33) such that the fluid FD is allowed to bypass around the heat exchanger 1. For example, as in a modified example shown in FIG. 10, the positions of an external inlet 302a and an external outlet 302b may be opposite to those of the first embodiment, and the positions of a supply port 302c and a return port 302d may be opposite to those of the first embodiment.

In the case of FIG. 10, a first valve seat 323a is formed in a communication hole 323 that allows a passage 22b and a passage 22c to communicate with each other, and a second valve seat 324a is formed in a communication hole 324 that allows a passage 22a and the passage 22b to communicate with each other. A first passage 31 includes the passage 22b, the communication hole 323, and the passage 22c. A second passage 32 includes the passage 22a. A connection passage 33 includes the communication hole 324. In a second state P2, a valve body 25 is moved in a Z1 direction to shut off the supply port 302c (the supply port 2c side of the first passage 31 with respect to the connection passage 33). A fluid FD cannot flow into the heat exchanger 1, the inlet (forward path 15a) of which is shut off, and thus the fluid FD flows into the external outlet 302b via the external inlet 302a through the connection passage 33 without flowing into the heat exchanger 1. Alternatively, when a plurality of valve bodies are provided, both the supply port 302c and the return port 302d may be shut off in the second state P2.

While the example in which the temperature-sensitive drive 29 (212) (temperature-sensitive actuator) that moves the valve body 25 (210) according to the temperature of the fluid FD is provided has been shown in each of the aforementioned first and second embodiments, the present invention is not restricted to this. In the present invention, a temperature sensor that detects the temperature of the fluid and a drive that moves the valve body may be separately provided. As a temperature sensor, a temperature sensor can be used. As a drive, an electric motor or a solenoid can be used, for example. In this case, the drive is only required to move the valve body according to a temperature detected by the temperature sensor.

While the example in which the valve 2 (202) includes the passages 22a, 22b, and 22c aligned in the Z direction, and the valve body 25 (210) moves in the Z direction has been shown in each of the aforementioned first and second embodiments, the present invention is not restricted to this. The arrangement of the passages and the moving direction of the valve body are arbitrary. For example, the passages 22a, 22b, and 22c may not be aligned in the thickness direction (Z direction) of the core 11 but may be aligned in the short-side direction (A direction) along the surface, and the valve body 25 may move in the short-side direction.

### Description of Reference Numerals

1: heat exchanger
2, 202: valve
2a, 302a: external inlet
2b, 302b: external outlet
2c, 302c: supply port
2d, 302d: return port
23a, 323a: first valve seat
24a, 324a: second valve seat
25, 210: valve body
25a, 211a: first surface
25b, 211b: second surface
29, 212: temperature-sensitive drive
31: first passage
32: second passage
33: connection passage
100, 200: heat exchanger system
110: external fluid circuit
111: aircraft engine
FD: fluid
P1: first state
P2: second state
S: curved surface

## Claims

1. A heat exchanger system comprising:
a heat exchanger (1) configured to allow a fluid (FD) to flow therethrough and perform heat exchange; and
a valve (2; 202) including an external inlet (2a; 302a) and an external outlet (2b; 302b), both of which are connected to an external fluid circuit (110) configured to allow the fluid (FD) to flow therethrough, a supply port (2c; 302c) configured to allow the fluid (FD) to be supplied to the heat exchanger (1), and a return port (2d; 302d) configured to receive the fluid (FD) that has passed through the heat exchanger (1); **characterized in that**
the valve (2; 202) is configured to be switchable between:
a first state (P1) in which the external inlet (2a; 302a) and the supply port (2c; 302c) are connected to each other, and the external outlet (2b; 302b) and the return port (2d; 302d) are connected to each other; and
a second state (P2) in which at least one of the supply port (2c; 302c) and the return port (2d; 302d) is shut off, and the external inlet (2a; 302a) and the external outlet (2b; 302b) are connected to each other; and
the valve (2; 202) includes:
only one valve body (25; 210) configured to move to contact a first valve seat (23a; 323a) on a first surface (25a; 211a) in a moving direction of the valve body (25; 210) so as to switch to the first state (P1) and to contact a second valve seat (24a; 324a) on a second surface (25b; 211b) in the moving direction of the valve body (25; 210) so as to switch to the second state (P2);
a rod urged toward the first valve seat (23a; 323a) by a spring member; and
a temperature-sensitive drive (29; 212) provided at a tip of the rod and configured to move the valve body (25; 210) according to a temperature of the fluid (FD); and
the only one valve body (25; 210) having the first surface (25a; 211a) and the second surface (25b; 211b) is fixed to the temperature-sensitive drive (29; 212).

2. The heat exchanger system according to claim 1, wherein the valve (2; 202) is configured to switch between the first state (P1) and the second state (P2) according to a temperature of the fluid (FD) that flows through the valve (2; 202).

3. The heat exchanger system according to claim 1 or 2, wherein
the valve (2; 202) includes a first passage (31) configured to connect the external inlet (2a; 302a) to the supply port (2c; 302c), a second passage (32) configured to connect the external outlet (2b; 302b) to the return port (2d; 302d), and a connection passage (33) configured to connect the first passage (31) to the second passage (32) to allow the external inlet (2a; 302a) and the external outlet (2b; 302b) to communicate with each other; and
the valve body (25; 210) is configured to switch between the first state (P1) and the second state (P2) by selectively moving to a position at which the connection passage (33) is shut off and a position at which a supply port (2c; 302c) side of the first passage (31) with respect to the connection passage (33) or a return port side of the second passage (32) with respect to the connection passage (33) is shut off.

4. The heat exchanger system according to any one of claims 1 to 3, wherein
the valve (2; 202) is a poppet valve including the valve body (25; 210) configured to linearly move between the first valve seat (23a; 323a) and the second valve seat (24a; 324a).

5. The heat exchanger system according to any one of claims 1 to 4, wherein
the temperature-sensitive drive (29; 212) is configured to sense the temperature of the fluid (FD) on both a first surface side and a second surface side of the valve body (25; 210).

6. The heat exchanger system according to claim 5, wherein
the valve body (25; 210) has a plate shape including the first surface (25a; 211a) and the second surface (25b; 211b); and
the temperature-sensitive drive (29; 212) is configured to penetrate the valve body (25; 210) to be exposed on the first surface (25a; 211a) and the second surface (25b; 211b).

7. The heat exchanger system according to claim 5, wherein
the temperature-sensitive drive (29; 212) includes a hollow case; and
the first surface (25a; 211a) and the second surface (25b; 211b) of the valve body (25; 210) are formed on the case.

8. The heat exchanger system according to any one of claims 5 to 7, wherein the temperature-sensitive drive (29; 212) is configured to move the valve body (25; 210) to switch the valve (2; 202) to the first state (P1) when the fluid (FD) has a temperature equal to or higher than a predetermined temperature, and to move the valve body (25; 210) to switch the valve (2; 202) to the second state (P2) when the fluid (FD) has a temperature lower than the predetermined temperature.

## Patentansprüche

1. Wärmetauschersystem, welches aufweist:
einen Wärmetauscher (1), der konfiguriert ist, um einem Fluid (FD) zu erlauben dadurch zu strömen und einen pWärmeaustausch durchzuführen; und
ein Ventil (2; 202), das aufweist: einen externen Einlass (2a; 302a) und einen externen Auslass (2b; 302b), die beide mit einem externen Fluidkreislauf (110) verbunden sind, welcher konfiguriert ist, um dem Fluid (FD) zu erlauben, dadurch zu fließen, einen Zufuhranschluss (2c; 302c), welcher konfiguriert ist, um dem Fluid (FD) zu erlauben dem Wärmetauscher (1) zugeführt zu werden, und einen Rückführungsanschluss (2d; 302d), welcher konfiguriert ist, um das Fluid (FD) aufzunehmen, welches den Wärmetauscher (1) durchlaufen hat; **dadurch gekennzeichnet, dass**
das Ventil (2; 202) konfiguriert ist, um schaltbar zu sein zwischen:
einem ersten Zustand (P1), in dem der externe Einlass (2a; 302a) und der Zufuhranschluss (2c; 302c) miteinander verbunden sind, und der externe Auslass (2b; 302b) und der Rückführungsanschluss (2d; 302d) miteinander verbunden sind; und
einen zweiten Zustand (P2), in dem zumindest einer von dem Zufuhranschluss (2c; 302c) und dem Rückführungsanschluss (2d; 302d) abgesperrt ist und der externe Einlass (2a; 302a) und der externe Auslass (2b; 302b) miteinander verbunden sind; und
das Ventil (2; 202) aufweist:
nur ein Ventilkörper (25; 210), der konfiguriert ist, um sich zu bewegen, um einen ersten Ventilsitz (23a; 323a) an einer ersten Fläche (25a; 211a) in einer Bewegungsrichtung des Ventilkörpers (25; 210) zu kontaktieren, um in den ersten Zustand (P1) zu schalten, und einen zweiten Ventilsitz (24a; 324a) an einer zweiten Fläche (25b; 211b) in der Bewegungsrichtung des Ventilkörpers (25; 210) zu kontaktieren, um in den zweiten Zustand (P2) zu schalten;
eine Stange, die durch ein Federelement in Richtung auf den ersten Ventilsitz (23a; 323a) hin gedrückt wird; und
einen temperaturempfindlichen Antrieb (29; 212), der an einer Spitze der Stange bereitgestellt ist und konfiguriert ist, um den Ventilkörper (25; 210) gemäß einer Temperatur des Fluids (FD) zu bewegen; und
der einzige Ventilkörper (25; 210), welcher die erste Fläche (25a; 211a) und die zweite Fläche (25b; 211b) hat, an dem temperaturempfindlichen Antrieb (29; 212) befestigt ist.

2. Wärmetauschersystem gemäß Anspruch 1, wobei das Ventil (2; 202) konfiguriert ist, um zwischen dem ersten Zustand (P1) und dem zweiten Zustand (P2) gemäß einer Temperatur des Fluids (FD), das durch das Ventil (2; 202) fließt, zu schalten.

3. Wärmetauschersystem gemäß Anspruch 1 oder 2, wobei
das Ventil (2; 202) eine erste Passage (31), welche konfiguriert ist, um den externen Einlass (2a; 302a) mit dem Zufuhranschluss (2c; 302c) zu verbinden, eine zweite Passage (32), welche konfiguriert ist, um den externen Auslass (2b; 302b) mit dem Rückführungsanschluss (2d; 302d) zu verbinden, und eine Verbindungspassage (33) aufweist, welche konfiguriert ist, um die erste Passage (31) mit der zweiten Passage (32) zu verbinden, um dem externe Einlass (2a; 302a) und dem externe Auslass (2b; 302b) zu erlauben miteinander zu kommunizieren; und
der Ventilkörper (25; 210) konfiguriert ist, um zwischen dem ersten Zustand (P1) und dem zweiten Zustand (P2) zu schalten mittels wahlweise Bewegens an eine Position, in welcher die Verbindungspassage (33) abgesperrt ist, und an eine Position, in welcher ein Zufuhranschluss (2c; 302c) - Seite der ersten Passage (31) in Bezug auf die Verbindungspassage (33) oder eine Rückführungsanschlussseite der zweiten Passage (32) in Bezug auf die Verbindungspassage (33) abgesperrt ist.

4. Wärmetauschersystem gemäß irgendeinem der Ansprüche 1 bis 3, wobei
das Ventil (2; 202) ein Sitzventil ist, das den Ventilkörper (25; 210) aufweist, welcher konfiguriert ist, um sich linear zwischen dem ersten Ventilsitz (23a; 323a) und dem zweiten Ventilsitz (24a; 324a) zu bewegen.

5. Wärmetauschersystem gemäß irgendeinem der Ansprüche 1 bis 4, wobei
der temperaturempfindliche Antrieb (29; 212) konfiguriert ist, um die Temperatur des Fluids (FD) sowohl an einer ersten Seitenfläche als auch an einer zweiten Seitenfläche des Ventilkörpers (25; 210) zu erfassen.

6. Wärmetauschersystem gemäß Anspruch 5, wobei
der Ventilkörper (25; 210) eine Plattenform hat, welche die erste Fläche (25a; 211a) und die zweite Fläche (25b; 211b) aufweist; und
der temperaturempfindliche Antrieb (29; 212) konfiguriert ist, den Ventilkörper (25; 210) zu durchdringen, um an der ersten Fläche (25a; 211a) und der zweiten Fläche (25b; 211b) frei zu liegen.

7. Wärmetauschersystem gemäß Anspruch 5, wobei
der temperaturempfindliche Antrieb (29; 212) ein hohles Gehäuse aufweist; und
die erste Fläche (25a; 211a) und die zweite Fläche (25b; 211b) des Ventilkörpers (25; 210) an dem Gehäuse gebildet sind.

8. Wärmetauschersystem gemäß irgendeinem der Ansprüche 5 bis 7, wobei der temperaturempfindliche Antrieb (29; 212) konfiguriert ist, um den Ventilkörper (25; 210) zu bewegen, um das Ventil (2; 202) in den ersten Zustand (P1) zu schalten, wenn das Fluid (FD) eine Temperatur gleich oder höher als eine vorbestimmte Temperatur hat, und um den Ventilkörper (25; 210) zu bewegen, um das Ventil (2; 202) in den zweiten Zustand (P2) zu schalten, wenn das Fluid (FD) eine Temperatur niedriger als die vorbestimmte Temperatur hat.

## Revendications

1. Système d'échangeur de chaleur, comprenant :
un échangeur de chaleur (1) configuré pour permettre à un fluide (FD) de s'écouler à travers celui-ci et d'effectuer un échange de chaleur ; et
une vanne (2 ; 202) comprenant une entrée externe (2a ; 302a) et une sortie externe (2b ; 302b), toutes les deux connectées à un circuit de fluide externe (110) configuré pour permettre au fluide (FD) de s'écouler à travers celui-ci, un orifice d'alimentation (2c ; 302c) configuré pour permettre au fluide (FD) d'être fourni à l'échangeur de chaleur (1), et un orifice de retour (2d ; 302d) configuré pour recevoir le fluide (FD) qui a traversé l'échangeur de chaleur (1) ; **caractérisé en ce que**
la vanne (2 ; 202) est configurée pour être commutable entre :
un premier état (P1) dans lequel l'entrée externe (2a ; 302a) et l'orifice d'alimentation (2c ; 302c) sont connectés l'un à l'autre, et la sortie externe (2b ; 302b) et l'orifice de retour (2d ; 302d) sont connectés l'un à l'autre ; et
un deuxième état (P2) dans lequel au moins un parmi l'orifice d'alimentation (2c ; 302c) et l'orifice de retour (2d ; 302d) est fermé, et l'entrée externe (2a ; 302a) et la sortie externe (2b ; 302b) sont connectées l'une à l'autre ; et
la vanne (2 ; 202) comprend :
un seul corps de vanne (25 ; 210) configuré pour se déplacer afin de contacter un premier siège de vanne (23a ; 323a) sur une première surface (25a ; 211a) dans une direction de déplacement du corps de vanne (25 ; 210) de manière à passer au premier état (P1) et à contacter un deuxième siège de vanne (24a ; 324a) sur une deuxième surface (25b ; 211b) dans la direction de déplacement du corps de vanne (25 ; 210) de manière à passer au deuxième état (P2) ;
une tige poussée vers le premier siège de vanne (23a ; 323a) par un élément de ressort ; et
un entraînement sensible à la température (29 ; 212) prévu à une pointe de la tige et configuré pour déplacer le corps de vanne (25 ; 210) en fonction d'une température du fluide (FD) ; et
le seul corps de vanne (25 ; 210) ayant la première surface (25a ; 211a) et la deuxième surface (25b ; 211b) est fixé à l'entraînement sensible à la température (29 ; 212).

2. Système d'échangeur de chaleur selon la revendication 1, dans lequel la vanne (2 ; 202) est configurée pour passer entre le premier état (P1) et le deuxième état (P2) en fonction d'une température du fluide (FD) qui s'écoule à travers la vanne (2 ; 202).

3. Système d'échangeur de chaleur selon la revendication 1 ou 2, dans lequel
la vanne (2 ; 202) comprend un premier passage (31) configuré pour relier l'entrée externe (2a ; 302a) à l'orifice d'alimentation (2c ; 302c), un deuxième passage (32) configuré pour relier la sortie externe (2b ; 302b) à l'orifice de retour (2d ; 302d), et un passage de connexion (33) configuré pour relier le premier passage (31) au deuxième passage (32) afin de permettre à l'entrée externe (2a ; 302a) et à la sortie externe (2b ; 302b) de communiquer l'une avec l'autre ; et
le corps de vanne (25 ; 210) est configuré pour passer entre le premier état (P1) et le deuxième état (P2) en se déplaçant sélectivement vers une position dans laquelle le passage de connexion (33) est fermé et une position dans laquelle un côté d'orifice d'alimentation (2c ; 302c) du premier passage (31) par rapport au passage de connexion (33) ou un côté d'orifice de retour du deuxième passage (32) par rapport au passage de connexion (33) est fermé.

4. Système d'échangeur de chaleur selon l'une quelconque des revendications 1 à 3, dans lequel
la vanne (2 ; 202) est une vanne à siège comprenant le corps de vanne (25 ; 210) configuré pour se déplacer linéairement entre le premier siège de vanne (23a ; 323a) et le deuxième siège de vanne (24a ; 324a).

5. Système d'échangeur de chaleur selon l'une quelconque des revendications 1 à 4, dans lequel
l'entraînement sensible à la température (29 ; 212) est configuré pour détecter la température du fluide (FD) à la fois sur un premier côté de surface et sur un deuxième côté de surface du corps de vanne (25 ; 210).

6. Système d'échangeur de chaleur selon la revendication 5, dans lequel
le corps de vanne (25 ; 210) a une forme de plaque comprenant la première surface (25a ; 211a) et la deuxième surface (25b ; 211b) ; et
l'entraînement sensible à la température (29 ; 212) est configuré pour pénétrer dans le corps de vanne (25 ; 210) afin d'être exposé sur la première surface (25a ; 211a) et la deuxième surface (25b ; 211b).

7. Système d'échangeur de chaleur selon la revendication 5, dans lequel
l'entraînement sensible à la température (29 ; 212) comprend un boîtier creux ; et
la première surface (25a ; 211a) et la deuxième surface (25b ; 211b) du corps de vanne (25 ; 210) sont formées sur le boîtier.

8. Système d'échangeur de chaleur selon l'une quelconque des revendications 5 à 7, dans lequel l'entraînement sensible à la température (29 ; 212) est configuré pour déplacer le corps de vanne (25 ; 210) pour faire passer la vanne (2 ; 202) au premier état (P1) lorsque le fluide (FD) a une température égale ou supérieure à une température prédéterminée, et pour déplacer le corps de vanne (25 ; 210) pour faire passer la vanne (2 ; 202) au deuxième état (P2) lorsque le fluide (FD) a une température inférieure à la température prédéterminée.
